Europäisches Patentamt

European Patent Office

Office européen des brevets

(19)

(11) Numéro de publication: **0 341 150**
**A1**

(12) **DEMANDE DE BREVET EUROPEEN**

(21) Numéro de dépôt: 89401243.4

(22) Date de dépôt: 02.05.89

(51) Int. Cl.⁴: **C 04 B 28/26**
C 04 B 38/10, B 28 B 7/00,
B 28 B 19/00
//(C04B28/26,14:12,14:16,
14:46)

(30) Priorité: 04.05.88 FR 8806010

(43) Date de publication de la demande:
08.11.89 Bulletin 89/45

(84) Etats contractants désignés:
AT BE CH DE ES FR GB GR IT LI LU NL SE

(71) Demandeur: ARIS S.A.
3 chemin de la Poterie B.P. 19
F-72340 La Charte sur le Loir (FR)

(72) Inventeur: Panhelleux, Gérard
66, rue de la Mariette
F72000 Le Mans (FR)

Moret, Claude
4, Allée Molière
F-93390 Clichy Sous Bois (FR)

(74) Mandataire: Rodhain, Claude et al
Cabinet Claude Rodhain 30, rue la Boétie
F-75008 Paris (FR)

(54) Matériau composite réfractaire et son procédé de fabrication.

(57) Matériau composite réfractaire, en particulier du type à structure alvéolaire, et son procédé de fabrication.

Le matériau, présentant de bonnes caractéristiques physiques et mécaniques et une bonne résistance au feu, comprend une matrice à structure alvéolaire, constituée d'une mousse durcie d'un liant minéral, des charges minérales de structure ou d'allègement. Le liant est du silicate de sodium.

Ce matériau est plus particulièrement applicable à la réalisation de plaques d'isolation thermique et de protection contre le feu.

EP 0 341 150 A1

## Description

### Matériau composite réfractaire et son procédé de fabrication

L'invention concerne un matériau composite réfractaire, en particulier du type à structure alvéolaire, et son procédé de fabrication.

On connaît déjà, d'après l'art antérieur de la technique, des matériaux réfractaires composés de fibres minérales liées par déshydratation. Malheureusement ces matériaux présentent des caractéristiques mécaniques relativement mauvaises, notamment une faible résistance aux chocs et à l'effritement. De plus, ces matériaux n'ont pas de peau extérieure étanche et sont très sensibles à la reprise de l'humidité.

On connaît également des matériaux formés d'une charge minérale liés par une résine de synthèse. Ils ont pour inconvénient de se dégrader par manque de cohésion et surtout de dégager des fumées toxiques ou corrosives lorsqu'ils sont soumis à une température supérieure à 200°C.

En conséquence, l'invention a pour objet de réaliser un nouveau matériau composite réfractaire qui ne présente pas les inconvénients précédemment cités.

Un premier objet de l'invention est de réaliser un matériau composite réfractaire possédant de très bonnes caractéristiques physiques et mécaniques et simultanément une densité faible.

Un second objet de l'invention est de réaliser un tel matériau qui présente au cours de sa fabrication, une forte expansion volumique en cours de déshydratation, par élévation de température, ce qui permet de le mouler et d'obtenir un produit fini aux dimensions exactes du moule, sans qu'il soit nécessaire de faire subir au produit un usinage de reprise particulièrement coûteux.

Un troisième objet de l'invention est de réaliser un matériau de ce type, à un prix de revient relativement faible, grâce à l'utilisation de constituants de production courante et bon marché, dont l'approvisionnement est aisé.

Ces objets de l'invention, ainsi que d'autres qui apparaîtront par la suite, sont atteints notamment à l'aide d'un matériau composite réfractaire, comprenant une matrice à structure alvéolaire, constituée d'une mousse durcie d'un liant minéral, caractérisé en ce qu'il comprend des charges minérales de structure ou d'allègement et en ce que le liant est du silicate de sodium.

Ce matériau est obtenu à l'aide d'un procédé consistant à :

    a) former une mousse en mélangeant de l'eau, un agent moussant et éventuellement un agent gonflant,

    b) ajouter à cette mousse, une émulsion de silicate de sodium,

    c) ajouter des charges minérales,

    d) couler ou injecter dans un moule la pâte obtenue,

    e) déshydrater cette pâte par élévation de température.

La présente invention sera mieux comprise à la lecture de la description suivante, d'un mode de réalisation préférentiel, donné à titre d'exemple illustratif et non limitatif.

Le matériau composite réfractaire selon l'invention est destiné à être utilisé par exemple, pour la fabrication d'un panneau d'isolation thermique. A cet effet, il est réalisé à partir de liant et de charges d'origine minérale, ce qui lui permet de présenter une résistance au feu exceptionnelle et de ne pas dégager de fumée toxique ou corrosive, lorsqu'il est soumis à des températures élevées pouvant aller jusqu'à 1.600°C en surface. Lors d'une telle agression, il se produit une vitrification de la peau extérieure, ce qui donne une étanchéité de surface, évitant la pénétration des gaz chauds et des flammes au coeur du produit.

Le matériau selon l'invention comprend donc une matrice à structure alvéolaire, constituée d'une mousse durcie d'un liant minéral, et de charges minérales.

Selon le mode préférentiel de réalisation de l'invention, le liant minéral, obligatoirement hydrophile, est du silicate de sodium. En effet, ce produit a la propriété de prendre une forme rigide, irréversible, après déshydratation, ce qui le rend insensible à l'humidité. En outre, son prix de revient est relativement faible, et son approvisionnement aisé, car il est couramment utilisé comme colle en cartonnerie, principalement pour la fabrication des cartons ondulés. Ce liant, sous forme d'une émulsion aqueuse de silicate de sodium, comprend 60 % d'eau, 30 % de silice $SiO_2$ et 10 % de $NaO_2$.

Les charges minérales peuvent être hydrophiles ou hydrophobes. Les charges hydrophiles sont de préférence, du silicate de calcium. Il s'agit de fibres courtes ayant une longueur inférieure à 7 mm (5 mm en moyenne) et un diamètre d'environ 12 microns par exemple. Ces fibres se présentent sous forme d'une poudre fibreuse très aérée, comprenant principalement 45 % de $SiO_2$ et 35 % de $CaO$. Les charges hydrophobes sont par exemple, des fibres de roche, telles que celles de basalte.

La charge minérale peut en outre comprendre des billes sensiblement sphériques et pouvant être creuses ou pleines, de silice ou de silicate d'aluminium, par exemple les granulés expansés de roche volcanique "CECAPERL", (fabriqués et commercialisés par les Etablissements CECA) ou les "cénosphères TECFIL", (fabriquées notamment par les Etablissements FILTEC LTD). Ces billes creuses constituent des charges inertes, de faible densité, d'un diamètre variant entre 1 et 6 mm. Le gonflage du liant minéral ou l'incorporation de telles billes, avec ou sans gonflage du liant, permet d'obtenir un matériau de densité faible, comprise par exemple, entre 0,2 et 0,6.

L'agent moussant utilisé, est d'un type courant industriel, par exemple, celui connu sous l'appellation commerciale "Teepol" ou "Sactilov".

On peut ajouter en outre à la mousse d'eau et d'agent moussant, un agent gonflant.

Selon une autre caractéristique de l'invention, la matrice de liant peut être à cellules ouvertes ou fermées, suivant la destination du produit.

L'adjonction de chlorure de sodium permet de réaliser des produits à cellules ouvertes et à liaisons filiformes.

En faisant varier la température de déshydratation et les conditions d'expansion, il est possible d'obtenir des produits à cellules ouvertes ou fermées, par rupture de tension de surface des bulles silicatées.

D'une manière générale, le matériau selon l'invention comprend environ 50 à 75 % en poids d'une émulsion de liant minéral et environ 15 à 40 % en poids de charges minérales.

Deux exemples de réalisation plus précis vont maintenant être donnés.

Exemple 1

- 75 % d'émulsion aqueuse de silicate de sodium, (liant),
- 18 % de poudre fibreuse de silicate de calcium, (charge de structure),
- 2 % d'agent moussant,
- 1 % d'agent gonflant.
- 4 % d'eau, (solvant).

Exemple 2

- 50 % d'émulsion aqueuse de silicate de sodium, (liant),
- 32 % de billes creuses de silicate d'aluminium (charge d'allègement),
- 6 % de granulés expansés de roche volcanique "CECAPERL" (charge de structure),
- 5,5 % de poudre fibreuse de silicate de calcium, (charge de structure),
- 1,5 % d'agent moussant,
- 1,5 % d'agent gonflant,
- 3,5 % d'eau, (solvant).

Eventuellement, il est possible d'ajouter une émulsion aqueuse d'un agent assouplissant, par exemple une émulsion à 0,2 % de base vinylique ou de latex, si l'on désire obtenir un produit final à structure moins rigide.

Le produit selon l'invention présente une forme structurelle. En d'autres termes, les bulles de grand diamètre sont à l'intérieur, et le diamètre des bulles diminue vers l'extérieur du produit, jusqu'à la peau lisse présentant des bulles de très petit diamètre.

Le matériau composite réfractaire selon l'invention est obtenu à l'aide d'un procédé de fabrication comprenant les étapes consistant à :

a) mélanger l'eau, l'agent moussant, et éventuellement l'agent gonflant dans les proportions indiquées ci-dessus, par brassage de manière aérée, jusqu'à obtenir une mousse de consistance ferme, par exemple au moyen d'un dispositif à ailettes tournant à grande vitesse (3000 tours/mn),

b) ajouter, par incorporation progressive, cette mousse à la quantité nécessaire d'émulsion de silicate de sodium, préalablement placée dans la cuve d'un mélangeur hydromécanique.

c) ajouter progressivement les charges minérales, soit de poudre fibreuse de silicate de calcium, soit de granulés expansés de roche volcanique, soit de billes creuses de silicate d'aluminium, tout en continuant à faire tourner le mélangeur, de façon à obtenir une pâte onctueuse,

d) lorsque les charges sont bien imprégnées de liant, couler ou injecter sur une plaque, ou sur un tapis roulant en continu ou dans un moule approprié, ladite pâte,

e) déshydrater cette pâte par élévation de température.

On peut éventuellement, entre les étapes c) et d), ajouter une émulsion d'agent assouplissant, en continuant à brasser.

Les étapes a), b) et c) pourraient également être effectuées dans un ordre différent.

Selon une caractéristique fondamentale de l'invention, le procédé consiste donc à couler ou à injecter la pâte obtenue, sur une plaque ou sur un tapis roulant en continu, ou dans un moule, avant la déshydratation. Lorsque l'on limite au moyen d'un moule, l'expansion volumique de la pâte, due à l'élévation de température au cours de la déshydratation, on obtient un produit fini, aux dimensions exactes du moule, de sorte qu'il n'est pas nécessaire de faire subir au produit un usinage de reprise. Ceci est un avantage considérable au niveau des prix de revient et de la précision dimensionnelle, par rapport aux matériaux connus obtenus par des techniques de déshydratation d'une pâte aspirée, non alvéolaire, de fibres minérales. En effet, en raison du retrait après déshydratation, de ces matériaux non alvéolaires, il est obligatoire d'usiner les pièces, pour obtenir des formes géométriques précises. Le procédé selon l'invention permet donc d'éviter cette opération de reprise.

La déshydratation de la mousse de liant minéral permet de donner au matériau sa structure alvéolaire rigide, car le liant minéral qui entoure les bulles d'air, se solidifie de manière irréversible. A cet effet, la déshydratation de la pâte est réalisée par une élévation de température qui peut aller jusqu'à 200°C, par exemple dans une étuve, ou entre deux plateaux chauffants, ou par conduction ou par rayonnement, ou par des émetteurs de micro-ondes, judicieusement répartis par rapport à la surface à déshydrater ou suivant la forme du moule. Le temps de déshydratation est fonction de l'épaisseur, il peut être de 45 mn à quelques heures dans une étuve, mais est beaucoup plus court, de 1 à 5 minutes, si l'on porte à une température élevée le coeur de la pâte à l'aide d'émetteurs de micro-ondes.

L'élévation de température produit une augmentation de pression dans les bulles, se traduisant par une expansion volumique du matériau à l'état pâteux, et ceci jusqu'à solidification complète. En limitant le volume d'expansion du matériau on peut faire varier sa densité, et aussi ses caractéristiques de dureté et d'étanchéité de peau extérieure.

Par ailleurs, les moulages sont simples et aisément reproductibles. En pratique, la pâte doit être coulée ou injectée dans des moules à parois revêtues de film de "Teflon" (PTFE : polytetrafluorethylène) pour éviter le collage de la pâte sur les parois. Il est préférable que la pâte soit lissée en surface, avant la mise en place dans le moule, pour favoriser la formation d'une peau superficielle lisse à structure non alvéolaire. Certains évents judicieusement disposés ou même de légères fuites de fermeture de jointoiement du moule sont suffisants pour laisser échapper les vapeurs d'eau.

Pour les pièces de petites dimensions, il est également possible d'utiliser des moules en résine non poreuse, par exemple en résine phénolique armée de fibres de verre, ou en polytétrafluoroéthylène, à condition de percer dans les parois du moule une multitude de micro-trous pour permettre l'évacuation de l'eau.

Après solidification du matériau, le léger retrait dû à la différence de dilatation en cours de refroidissement, facilite le démoulage.

On peut fabriquer le matériau en continu, à l'aide d'une machine spécifique possédant en aval une alimentation des constituants avec doseurs automatiques, un brassage de mousse, un malaxage des composants, puis en amont, une injection sous pression de produit, un calandrage, une expansion volumique en température, et une mise en dimensions programmée.

Dans le cas d'un moulage de plaques en coffrage, les surfaces du plateau inférieur et de la plaque supérieure peuvent être revêtues d'une couche de matière absorbant l'eau, par exemple du genre papier buvard. Ces couches absorbantes pourront être réutilisées de nombreuses fois, après séchage en étuve.

Pour obtenir une surface extérieure rigide et de bon aspect, il est préférable de disposer une feuille de cellulose de part et d'autre du produit qui s'imprègnera de silicate de sodium et deviendra lisse et résistante. Dans ce cas, on déposera une feuille de cellulose dans le fond du moule et une, sous le couvercle, avant de couler le produit. En fabrication continue, il sera ajouté sur la machine, deux bobines de cellulose, pour recouvrir le produit sur ses deux faces.

En variante, on peut utiliser à la place de cellulose, une épaisseur de matière spécifique non étanche qui formera le revêtement extérieur du produit, par exemple, du papier décoré, du liège, de la paille ou du sisal tressé, du tissu, du velours, un film de plastique thermoplastique ou thermodurcissable, etc...

On peut également couler ou injecter la pâte in situ, par exemple pour la protection de parois métalliques contre l'incendie. Dans ce cas, seule la surface amovible de moulage comprendra une couche de matière absorbante.

Le produit peut en outre être teinté dans la masse au moyen d'une poudre très fine (de l'ordre de quelques microns) de matière colorante, qui est ajoutée à la pâte en cours de mélange.

Dans le cas où l'on réalise un produit à cellules fermées, le moussage et le mélange des composants peuvent être effectués sous atmosphère contrôlée. Après avoir extrait l'air de la chambre de mélange, on peut ainsi obtenir une structure alvéolaire dont les cellules sont remplies d'un gaz spécifique, tel qu'un gaz très léger, par exemple l'hélium, si l'on souhaite obtenir un produit ayant une densité extrêmement faible.

En revanche, si l'on veut obtenir une structure alvéolaire à cellules ouvertes, il suffit d'augmenter la température de déshydratation et, de permettre l'expansion du produit jusqu'à éclatement des bulles. On peut également ajouter du chlorure de sodium à l'eau de moussage, ce qui permet de réaliser un produit à cellules ouvertes et à liaisons filiformes.

Lorsque l'on supprime la peau extérieure d'un produit à cellules ouvertes, celui-ci présente une structure poreuse particulièrement utile pour résoudre des problèmes de filtrage, voire de filtration, éventuellement à température élevée puisqu'il possède des caractéristiques réfractaires.

Par une opération de pyrolyse, effectuée ultérieurement sur le produit déshydraté, on peut, en dépassant légèrement le point de vitrification du silicate de sodium, obtenir un nouveau produit dont les liaisons rigidifiées permettent une utilisation du matériau à des températures élevées, en continu, mais obligatoirement inférieures au point de vitrification du silicate.

Lorsque l'on utilise des charges minérales hydrophiles, par exemple les fibres de silicate de calcium, on peut prévoir une protection extérieure des pièces ou panneaux, par projection d'un vernis hydrofuge et/ou hydrophobe, pour éviter toute reprise d'humidité en stockage prolongé.

Si l'on utilise uniquement des fibres hydrophobes, le pourcentage en fibres dans le produit peut atteindre 80 %, mais celui-ci est alors plus fragile aux chocs.

On peut aussi ajouter des charges hydrophiles à des fibres hydrophobes, pour augmenter la structuration du produit, donc améliorer les caractéristiques mécaniques de celui-ci.

En choisissant de façon appropriée les quantités d'agent moussant et gonflant, et/ou le volume disponible pour l'expansion volumique du matériau en cours de déshydratation, on peut obtenir des produits dont les qualités mécaniques peuvent varier assez largement et dont les densités sont par exemple comprises entre 0,2 et 0,6. Toutefois, on notera que lorsque les proportions précitées des composants ne sont pas respectées, les résultats obtenus peuvent être très différents. Ainsi, un défaut d'eau conduit à une pâte difficilement moulable, alors qu'un excès d'eau conduit à un produit à grandes cavités internes et à peau extrêmement rigide.

De manière générale, le matériau composite selon l'invention est applicable à la fabrication de pièces et de panneaux de matériaux réfractaires répondant aux normes AFNOR anti-feu M0 et anti-fumée F0. Le matériau composite selon l'invention peut donc être utilisé pour la réalisation de plaques et de pièces moulées ou découpées d'isolation thermique, de calorifugeage et de protection contre le feu, de pièces pour fonderie de métaux non ferreux (creusets, goulottes, godets, poches, manchons de masselottage, cheneaux de coulée) de panneaux muraux, de plafonds suspendus, de garnitures coupe-feu, de pièces de forme pour fours, chaudières, appareils électroménagers, moteurs, propulseurs, isolateurs électriques, etc... Il peut également être utilisé comme élément de filtrage et de filtration. Enfin, le produit peut être réalisé en continu par injection en étalement ou en coffrage pour une utilisation dans la construction de batiments, à l'aide d'une pompe spéciale à béton, légèrement modifiée de façon à être adaptée à cet usage. Dans ce cas, la déshydratation peut être obtenue par l'utilisation de plaques ou de couvertures chauffantes, à disposer en surface apparente du produit préalablement lissé ou simplement par séchage naturel lorsque celui-ci est coulé en coffrage.

**Revendications**

1 - Matériau composite réfractaire, comprenant une matrice à structure alvéolaire, constituée d'une mousse durcie d'un liant minéral, caractérisé en ce qu'il comprend des charges minérales de structure ou d'allègement et en ce que le liant est du silicate de sodium.

2 - Matériau composite réfractaire selon la revendication 1, caractérisé en ce que la charge minérale est constituée de fibres de silicate de calcium.

3 - Matériau composite réfractaire selon la revendication 1, caractérisé en ce que la charge minérale est constituée de granulés expansés de roche volcanique.

4 - Matériau composite réfractaire selon la revendication 1, caractérisé en ce que la charge minérale comprend en outre des billes creuses de silicate d'aluminium.

5 - Matériau composite réfractaire selon l'une quelconque des revendications 1 à 4, caractérisé en ce qu'il comprend une agent gonflant.

6 - Matériau composite réfractaire selon la revendication 1, caractérisé en ce que la matrice de liant est à cellules fermées.

7 - Matériau composite réfractaire selon la revendication 1, caractérisé en ce que la matrice de liant est à cellules ouvertes.

8 - Matériau composite réfractaire selon la revendication 6, caractérisé en ce que les cellules de la structure alvéolaire sont remplies d'un gaz spécifique.

9 - Matériau composite réfractaire selon la revendication 8, caractérisé en ce que les cellules de la structure alvéolaire sont remplies d'hélium pour l'allègement du produit.

10 - Matériau composite réfractaire selon l'une quelconque des revendications 1 à 8, caractérisé en ce que la densité est comprise entre 0,2 et 0,6.

11 - Matériau composite réfractaire selon l'une quelconque des revendications 1 à 10, caractérisé en ce qu'il comprend environ 50 à 75 % en poids d'une émulsion de liant minéral et environ 15 à 40 % en poids de charges minérales.

12 - Matériau composite réfractaire selon la revendication 11, caractérisé en ce qu'il comprend en pourcentage en poids, 75 % d'une émulsion aqueuse de silicate de sodium, 18 % de poudre fibreuse de silicate de calcium, 2 % d'agent moussant, 1 % d'agent gonflant et 4 % d'eau.

13 - Matériau composite réfractaire selon la revendication 11, caractérisé en ce qu'il comprend en pourcentage en poids, 50 % d'une émulsion aqueuse de silicate de sodium, 32 % de billes creuses de silicate d'aluminium, 6 % de granulés expansés de roche volcanique, 5,5 % de poudre fibreuse de silicate de calcium, 1,5 % d'agent moussant, 1,5 % d'agent gonflant et 3,5 % d'eau.

14 - Procédé d'obtention de matériau composite réfractaire selon l'une des revendications précédentes, caractérisé en ce qu'il comprend les étapes consistant à :
a) former une mousse en mélangeant par brassage de l'eau avec un agent moussant,
b) ajouter cette mousse à une émulsion de silicate de sodium,
c) ajouter des charges minérales,
d) couler ou injecter dans un moule la pâte obtenue,
e) déshydrater cette pâte par élévation de température.

15 - Procédé d'obtention de matériau composite réfractaire selon la revendication 14, caractérisé en ce qu'à l'étape a), on ajoute, en outre, un agent gonflant.

16 - Procédé selon la revendication 14 ou 15, caractérisé en ce que l'on ajoute une émulsion d'agent assouplissant entre les étapes c) et d).

17 - Procédé selon la revendication 14, caractérisé en ce qu'on déshydrate la pâte par une élévation de température pouvant aller jusqu'à 200°C.

18 - Procédé selon l'une quelconque des revendications 14 à 16, caractérisé en ce qu'on limite l'expansion volumique de la pâte due à l'élévation de température au cours de la déshydratation.

19 - Procédé selon la revendication 14, caractérisé en ce que les parois du moule sont recouvertes de polytétrafluorethylène.

20 - Procédé selon la revendication 14, caractérisé en ce que les surfaces du moule sont revêtues d'une matière absorbante.

21 - Procédé selon l'une quelconque des revendications 14 à 18, caractérisé en ce que l'on dispose une feuille de cellulose sur le fond et sous le couvercle du moule, avant d'y couler la pâte.

22 - Procédé selon l'une quelconque des revendications 14 à 18, caractérisé en ce qu'après l'étape de déshydratation, on effectue une pyrolyse du produit, en dépassant légèrement le point de vitrification du silicate de sodium, pour obtenir un produit à liaisons rigidifiées.

23 - Procédé selon la revendication 14, caractérisé en ce qu'on augmente la température de déshydratation et en ce qu'on permet l'expansion du produit, pour obtenir un produit à cellules ouvertes.

24 - Procédé selon la revendication 14, caractérisé en ce qu'on ajoute du chlorure de sodium à l'eau de moussage, pour obtenir un produit à cellules ouvertes.

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| X | DE-A-3 227 079 (I. ODLER)<br>* Revendications 1,3; page 5, lignes 13-18; page 6, lignes 21-30 * | 1,3,4,6 ,8 | C 04 B 28/26<br>C 04 B 38/10<br>B 28 B 7/00 |
| Y | | 2,10,11 ,14,17 | B 28 B 19/00 //<br>(C 04 B 28/26 |
| Y | DE-A-3 344 769 (CONWED CORP.)<br>* Revendications 1,18,62,63,71,87,88; page 25, lignes 8-13 * | 2,10,11 ,14,17 | C 04 B 14:12<br>C 04 B 14:16<br>C 04 B 14:46 ) |
| X | US-A-3 203 813 (V.H. GAJARDO et al.)<br>* Revendications 1,2 * | 1-4,22 | |
| A | US-A-2 170 102 (R.C. THOMPSON)<br>* Revendication 1; page 1, colonne de droite, lignes 5-15; page 2, colonne de droite, lignes 33-44 * | 1,7,14, 17,23 | |
| A | FR-A-2 130 393 (ORSZAGOS GUMIIPARI VALLALAT)<br>* Revendications 1,5,8 * | 1,5,12 | |
| A | DE-A-1 964 796 (J. CIPIN et al.)<br>* Revendications 1,2,6,8,11 * | 1,14 | DOMAINES TECHNIQUES RECHERCHES (Int. Cl.4)<br><br>C 04 B 28<br>C 04 B 38 |
| A | PATENT ABSTRACTS OF JAPAN, vol. 9, no. 180 (C-293)[1903], 25 juillet 1985, page 55 C 293; & JP-A-60 49 041 (KANEGAFUCHI KAGAKU KOGYO K.K.) 18-03-1985 | 9 | B 28 B 7<br>B 28 B 19<br>B 28 B 1 |
| A | GB-A-1 322 896 (W.R. GRACE)<br>* Page 1, lignes 16-19 *<br>-/- | 16 | |

Le présent rapport a été établi pour toutes les revendications

| Lieu de la recherche | Date d'achèvement de la recherche | Examinateur |
|---|---|---|
| LA HAYE | 28-06-1989 | DAELEMAN P.C.A. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P0402)

Office européen
des brevets

# RAPPORT DE RECHERCHE EUROPEENNE

Numero de la demande

EP 89 40 1243

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| A | FR-A-2 089 180 (DECORITE) <br> * Page 1, lignes 8-14; page 2, lignes 1-4 * <br> --- | 19 | |
| A | AU-A- 411 351 (O.J. MEDDINGS) <br> * Revendication 1 * <br> ----- | 20 | |

DOMAINES TECHNIQUES
RECHERCHES (Int. Cl.4)

Le présent rapport a été établi pour toutes les revendications

| Lieu de la recherche | Date d'achèvement de la recherche | Examinateur |
|---|---|---|
| LA HAYE | 28-06-1989 | DAELEMAN P.C.A. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
.........................................................................
& : membre de la même famille, document correspondant

EPO FORM 1503 03.82 (P0402)